# EUROPÄISCHE PATENTANMELDUNG

(11) **EP 2 506 177 A1**
(43) Veröffentlichungstag der Anmeldung: **03.10.2012**
(21) Anmeldenummer: 11160895.6
(22) Anmeldetag: 01.04.2011
(51) Int. Cl.: G06F 21/00

(54) **Verfahren und Vorrichtung zum Vergleich von Identifikationsdaten**

(71) Anmelder: Palio AG, 22765 Hamburg (DE)
(72) Erfinder: Fuchs, Heiko, 20359 Hamburg (DE)
(74) Vertreter: Eisenführ, Speiser & Partner

(57) **Zusammenfassung**

Die Erfindung betrifft ein Verfahren zum Empfangen, Verwalten und Versenden von Identifikationsdaten, mit den Verfahrensschritten: Hinterlegen eines Nutzercodewertes eines ersten Nutzers eines Mobilgerätes auf einem Servercomputer mittels eines Verfahrens mit den Verfahrensschritten: (i) auf dem Mobilgerät: Codieren von Identifikationsdaten des Nutzers in einen Nutzercodewert; (ii) Senden des Nutzercodewertes von dem Mobilgerät an einen Servercomputer; (iii) Speichern des Nutzercodewertes auf dem Servercomputer; und Vergleichen von Kontaktcodewerten von Kontakten des Nutzers mit Nutzercodewerten anderer Nutzer mittels eines Verfahrens mit den Verfahrensschritten: (a) auf dem Mobilgerät: Codieren von einem oder mehreren Einträgen einer Liste von Identifikationsdaten von Kontakten des Nutzers auf jeweils einen Kontaktcodewert, wobei die Liste von Identifikationsdaten auf dem Mobilgerät gespeichert ist; (b) Senden der einen oder mehreren Kontaktcodewerte von dem Mobilgerät an den Servercomputer; (c) auf dem Servercomputer: Vergleichen von zumindest einem der Kontaktcodewerte mit einem oder mehreren Codewerten, welche auf dem Servercomputer gespeichert sind, um einen gespeicherten Codewert zu finden, welcher mit einem der Kontaktcodewerte übereinstimmt, wobei der gespeicherte Codewert ein übereinstimmender Codewert ist; (d) bei gefundener Übereinstimmung: Senden einer entsprechenden Mitteilung über eine gefundene Übereinstimmung von dem Servercomputer an das Mobilgerät.

## Beschreibung

Die Erfindung betrifft ein Verfahren zum Empfangen, Verwalten und Versenden von Identifikationsdaten, mit den Verfahrensschritten: Hinterlegen eines Nutzercodewertes eines ersten Nutzers eines Mobilgerätes auf einem Servercomputer mittels eines Verfahrens mit den Verfahrensschritten: (i) auf dem Mobilgerät: Codieren von Identifikationsdaten des Nutzers in einen Nutzercodewert; (ii) Senden des Nutzercodewertes von dem Mobilgerät an einen Servercomputer; (iii) Speichern des Nutzercodewertes auf dem Servercomputer; und Vergleichen von Kontaktcodewerten von Kontakten des Nutzers mit Nutzercodewerten anderer Nutzer mittels eines Verfahrens mit den Verfahrensschritten: (a) auf dem Mobilgerät: Codieren von einem oder mehreren Einträgen einer Liste von Identifikationsdaten von Kontakten des Nutzers auf jeweils einen Kontaktcodewert, wobei die Liste von Identifikationsdaten auf dem Mobilgerät gespeichert ist; (b) Senden der einen oder mehreren Kontaktcodewerte von dem Mobilgerät an den Servercomputer; (c) auf dem Servercomputer: Vergleichen von zumindest einem der Kontaktcodewerte mit einem oder mehreren Codewerten, welche auf dem Servercomputer gespeichert sind, um einen gespeicherten Codewert zu finden, welcher mit einem der Kontaktcodewerte übereinstimmt, wobei der gespeicherte Codewert ein übereinstimmender Codewert ist; (d) bei gefundener Übereinstimmung: Senden einer entsprechenden Mitteilung über eine gefundene Übereinstimmung von dem Servercomputer an das Mobilgerät.

Die Erfindung betrifft ferner ein Datenverarbeitungsprogramm zur Ausführung auf einem Computer bzw. einem Mobilgerät, welches bewirkt, dass der Computer bzw. das Mobilgerät ein erfindungsgemäßes Verfahren ausführt, wenn das Programm darauf ausgeführt wird. Die Erfindung betrifft ferner einen Computer bzw. ein Mobilgerät mit einem erfindungsgemäßen Datenverarbeitungsprogramm.

Grundsätzlich besteht in der heutigen Kommunikationstechnik eine Vielzahl von Möglichkeiten, um Informationen zwischen zwei oder mehr Personen auf größere Distanzen mit technischen Übertragungsmitteln auszutauschen. Dabei kann grundsätzlich unterschieden werden zwischen der privaten Kommunikation, die ausschließlich zwischen zwei Personen abläuft und für andere Personen nicht einsehbar ist und üblicherweise solcherart verläuft, dass von den jeweiligen beiden Personen genutzte Computer oder Mobilgerät, worunter in diesem Zusammenhang insbesondere drahtgebundene oder drahtlose Telefongeräte, insbesondere solche mit erweitertem Funktionsumfang wie einer Bilddarstellung und einer menügesteuerten Benutzerführung wie sogenannte Smartphones verstanden werden sollen, die Informationen versendet werden. In die Versendung sind dabei in der Regel Vermittlungsstellen eingebunden, so dass eine direkte Kommunikation zwischen zwei Mobilgeräten nicht stattfindet, sondern durch Einbindung von zentralen, miteinander kommunizierenden Vermittlungsstellen erfolgt. Andererseits haben sich eine Vielzahl von Plattformen gebildet, in welche eine Vielzahl von Benutzern persönliche Informationen und Nachrichten einspeisen können, die dann einem größeren Benutzerkreis zugänglich gemacht sind. Diese, überwiegend Internet-basierten Kommunikationsplattformen beruhen auf der Informationseinspeisung auf eine zentral und gemeinsam benutzte Plattform durch jeden einzelnen Benutzer von seinem persönlich genutzten Computer bzw. Mobilgerät.

Eröffnet ein Nutzer ein neues Konto bei einer gegebenen Plattform, wie z.B. einem sozialen Netzwerk, einem IP-Telefoniedienstanbieter etc., so besteht typischerweise eine der ersten Handlungen des neuen Teilnehmers darin, unter den Teilnehmern der Plattform nach den eigenen Kontakten zu suchen. Dazu bieten viele Plattformen typischerweise Suchfunktionen an, mit denen ein Nutzer beispielsweise nach Name, Adresse oder Telefonnummer eines seiner Kontakte suchen kann. Ein solches Angebot ist aber für den neuen Nutzer sehr mühsam, da er nach jedem einzelnen seiner Kontakte manuell suchen muss und womöglich noch andere Schreibweisen und/oder Aliasse in Betracht ziehen muss. Da viele Nutzer mittlerweile Konten bei vielen verschiedenen Plattformen unterhalten (etwa für berufliche Kontakte, für private Kontakte, etc.) ist der Aufwand dieser manuellen Methode des Adressbuch-Abgleichs nicht mehr hinnehmbar.

Es ist ebenfalls bekannt, das Nutzer dem Betreiber der Plattform ihre persönlichen Zugangsdaten beispielsweise zu ihrem Email-Dienstanbieter übermitteln, mit Hilfe derer der Betreiber dann einen Abgleich der Email-Kontakte eines Nutzers mit den auf der Plattform angemeldeten Nutzern vornimmt. Übereinstimmungen werden dem Nutzer mitgeteilt, so dass er mit seinen Kontakten auch auf der für ihn neuen Plattform kommunizieren kann. Das Angebot einer solchen Technologie bietet zwar den Vorteil, dass ein Nutzer nicht mehr selbst und durch manuelle Eingaben nach seinen Kontakten suchen muss, andererseits werden hierbei Dritten (hier: dem Betreiber der Plattform) Zugang zu persönlichen und möglicherweise sensiblen Daten gewährt.

Zur Gewährung eines erhöhten Maßes an Datensicherheit ist ferner bekannt, Teilnehmer-seitig die zu recherchierenden Kontaktdaten zu verschlüsseln und an einen Servercomputer der entsprechenden Plattform zu senden. Der Servercomputer entschlüsselt die empfangenen Daten und vergleicht die Einzelelemente der Adressdatenliste mit den gespeicherten Nutzerdaten anderer Nutzer der Plattform. Ein solches Vorgehen hat für die Betreiber von Netzwerken den Vorteil, dass sich für sie auf einfachem Weg die Verbindungen zwischen ihren Nutzern in Erfahrung bringen lassen. Andererseits geschieht dies auf Kosten von Informationssicherheit: Um einen Vergleich der Adressbuchdaten zu ermöglichen werden die Kontaktdaten in entschlüsselbarer Form versendet, so dass Dritte potentiell die Daten entschlüsseln können, und somit Unberechtigte Informationen über die Verbindungen zwischen Nutzern eines Netzwerks erhalten.

Darüber hinaus variieren Adressbucheinträge typischerweise in Form und Größe: Neben möglicherweise verschiedenen Adressbuchsystemen mit verschiedenen Datenbanktypen, bieten Mobilgeräte neben der Speicherung von paarweisen Zuordnungen Name-Telefonnummer heutzutage auch die Speicherung zusätzlicher Daten an, wie z.B. Profilfotos oder Videos des Kontakts, Stimmaufnahmen, Postadresse usw. Dies würde potenziell das an den Servercomputer zu versendende Datenpaket erheblich vergrößern.

Der Erfindung liegt die Aufgabe zugrunde, ein Verfahren bereitzustellen, welches die oben genannten Probleme überwindet und ein Verfahren zum Empfangen, Verwalten und Versenden von Identifikationsdaten bereitzustellen, mit dem eine effizienter und sicherer Abgleich von Kontaktdaten ermöglicht wird.

Erfindungsgemäß wird diese Aufgabe gelöst durch ein Verfahren der eingangs erwähnten Art, wobei das Codieren von Identifikationsdaten auf einen Nutzercodewert mittels einer kryptologischen Hashfunktion H erfolgt; und wobei das Codieren von einem oder mehreren Einträgen einer Liste von Identifikationsdaten von Kontakten auf jeweils einen Kontaktcodewert mittels der gleichen kryptologischen Hashfunktion H erfolgt.

Mit dem erfindungsgemäßen Verfahren wird eine effiziente und sichere Möglichkeit zum Empfangen, Verwalten und Versenden von Einzelelementen eines elektronischen Adressbuches bereitgestellt, welche einerseits die spezifischen Umstände, welche sich in technischer Hinsicht aufgrund der erforderlichen Datensicherheit ergeben, andererseits die spezifischen Umstände, die sich aufgrund der unterschiedlichen technischen Möglichkeiten zu Verschlüsselung, Abgleich und Rückmeldung über einen gefundenen Treffer ergeben, in vorteilhafter Weise berücksichtigt. Grundlegender Kern des erfindungsgemä-βen Verfahrens ist dabei, dass jeder Adress- oder Telefonbucheintrag mittels einer kryptologischen Hashfunktion in nicht entschlüsselbarer Form, nämlich als Hashwert, gespeichert und an einen Zentralrechner versendet wird. Auf dem Zentralrechner sind die als Hashwerte codierten Daten anderer Nutzer gespeichert. Der Zentralrechner vergleicht in der Folge Hashwerte miteinander, um auf diese Weise das Adressbuch eines Nutzers bei Dienst A mit dem Adressbuch des Nutzers bei Dienst B zu synchronisieren. Mit dem erfindungsgemäßen Verfahren wird es somit in vorteilhafter Weise möglich, Kontaktlisten eines Nutzers in solcher Weise zu verwalten, dass lediglich bestimmte, den spezifischen Bedürfnissen entsprechende Daten versendet und empfangen werden, welche durch Anwendung einer kryptologischen Hashfunktion auf einen Eintrag in einer elektronischen Datenbank erzeugt werden. Mit dem erfindungsgemäßen Verfahren wird daher einerseits das zu versendende Datenvolumen in signifikanter Weise reduziert, da nicht mehr der vollständige Adressbucheintrag einschließlich Fotos, Videos und Klangbeispielen versendet werden, sondern nur noch ein Rechenwert fester Datengröße und andererseits die Datensicherheit beim Versenden an den Servercomputer, Speichern auf dem Servercomputer und Vergleichen der Hashwerte stets gewahrt ist, ohne dass hierzu weitere Sicherheitsmaßnahmen auf dem Servercomputer oder im Rahmen der Kommunikationsverbindung zwischen Mobilgerät und Servercomputer erforderlich wären. Insbesondere ist der Server nicht in der Lage die empfangenen Datenpakete zu entschlüsseln. Beim Abgleich der Daten mit gespeicherten Nutzerdaten werden Hashwerte miteinander verglichen - die entsprechenden Inhalte der Hashwerte sind dem Servercomputer bzw. jedem Dritten unbekannt. Ein besonderer Vorteil bei der Verwendung von kryptologischen Hashfunktionen liegt in ihrer einfachen Anwendung und schweren bzw. nahezu unmöglichen Umkehrbarkeit. Auch deshalb werden kryptologische Hashfunktionen bevorzugt angewendet bei erhöhten Anforderungen an Datensicherheit und -Integrität.

Bevorzugt werden die Codewerte, welche auf dem Servercomputer gespeichert sind, durch ein Hinterlegen von Nutzercodewerten anderer Nutzer auf dem Servercomputer mittels eines erfindungsgemäßen Verfahrens wie oben beschrieben erzeugt. Auf diese Weise ermöglicht die bevorzugte Ausführungsform des erfindungsgemäßen Verfahrens den Abgleich mit den Daten anderer Nutzer, ohne dass Dritte - sei es der Betreiber des Servers, seien es Unberechtigte Nutzer - die Möglichkeit haben, Original-Nutzerdaten miteinander zu korrelieren. Somit wird die Datensicherheit des erfindungsgemäßen Verfahrens verbessert.

Bevorzugt erfolgen die Schritte (a) bis (d) in Antwort auf ein Hinzufügen eines Eintrags zu der Liste von Identifikationsdaten von Kontakten des Nutzers. Auf diese Weise wird ein automatisches Benachrichtigen eines Nutzers darüber ermöglicht, dass ein Hashwert zu den Identifikationsdaten eines neuen Kontaktes ebenfalls auf dem Servercomputer hinterlegt ist. Ein solches Verfahren ist vorteilhaft, wenn ein Nutzer beispielsweise wissen möchte, ob sein neuer Kontakt auch ein Konto bei einem Social-Media-Netzwerk, bei einem IP-Telefonieanbieter etc. unterhält. Dies ist für den Nutzer von Interesse, soll aber ohne Gefährdung privater Informationen ermittelt werden. Indem auf dem Zentralrechner lediglich Hashwerte gespeichert sind, ist die Datensicherheit gewährleistet.

Bevorzugt umfasst das Verfahren ferner die Verfahrensschritte (e) Speichern von einem oder mehreren der Kontaktcodewerte, zu denen kein gespeicherten Codewert gefunden wird, welcher mit einem der Kontaktcodewerte übereinstimmt; (f) in Antwort auf ein Hinterlegen eines Nutzercodewertes eines weiteren Nutzers auf dem Servercomputer mittels eines erfindungsgemäßen Verfahrens: Vergleichen der in Schritt (e) gespeicherten Kontaktcodewerte mit dem Nutzercodewert des weiteren Nutzers mittels eines erfindungsgemäßen Verfahrens; und (g) bei gefundener Übereinstimmung: Senden einer entsprechenden Mitteilung über eine gefundene Übereinstimmung von dem Servercomputer an das Mobilgerät des Nutzers. Ein besonderer Vorteil dieser bevorzugten Ausführungsform liegt darin, einen Nutzer automatisch zu informieren, wenn einer seiner Kontakte ein Konto bei einem Social-Media-Netzwerk, bei einem IP-Telefonieanbieter etc. eröffnet, woraufhin dessen Daten auf dem Zentralrechner als Hashwerte hinterlegt werden. Gleichzeitig wird Dritten nicht die Möglichkeit eingeräumt, soziale Verbindungen zwischen Nutzern zu ermitteln, um diese Verbindung für Werbezwecke auszunutzen. Somit bietet die bevorzugte Ausführungsform eine erhöhte Sicherheit beim Abgleich von Adressbuchdaten.

Bevorzugt umfasst Schritt (d) ferner den Schritt: bei gefundener Übereinstimmung, Senden einer entsprechenden Mitteilung über eine gefundene Übereinstimmung von dem Servercomputer an ein Mobilgerät eines ersten Kontaktes des Nutzers, wobei der erste Kontakt dem übereinstimmenden Codewert entspricht. Bevorzugt werden die Mitteilungen an den Nutzer und an den ersten Kontakt als sog. Push-Notification gesendet. Eine solche Mitteilungsart hat den Vorteil, dass die Mitteilung auch empfangen wird, wenn das Mobilgerät nicht gestartet ist.

In einer bevorzugten Ausführungsform umfasst die kryptologische Hashfunktion eine Einweg-Hashfunktion, eine kollisionsresistente Hashfunktion oder eine schlüsselabhängige Hashfunktion. Eine Einweg-Hashfunktion weist dabei zum einen die sogenannte preimage-resistance-Eigenschaft auf. Bei Hashfunktionen H mit dieser Eigenschaft ist es praktisch unmöglich, zu einem Wert y eine Wert x zu finden, so dass gilt H(x) = y. Ferner sind Einweg-Hashfunktionen schwach kollisionsresistent. Danach ist es praktisch unmöglich, für schwach kollisionsresistente Hashfunktionen H' zu einem gegebenen Wert x einen zweiten Wert y - unterschiedlich von x - zu finden, so dass gilt H'(x) = H'(y). Schlüsselabhängige Hashfunktionen H" (auch Message Authentication Codes) weisen ferner die Eigenschaft der starken Kollisionsresistenz auf, nach der es praktisch unmöglich ist zwei voneinander verschiedene Werte x und y zu finden, für die gilt H"(x) = H"(y). Ein besonderer Vorteil bei der Verwendung von kryptologischen Hashfunktionen liegt in ihrer einfachen Anwendung und schweren bzw. nahezu unmöglichen Umkehrbarkeit. Auch deshalb werden kryptologische Hashfunktionen bevorzugt bei der angewendet bei erhöhten Anforderungen an Datensicherheit und -Integrität.

Weiterhin ist es bevorzugt, dass die Mitteilung über eine gefundene Übereinstimmung einen Zeiger auf einen oder mehrere Einträge in der Liste von Identifikationsdaten von Kontakten des Nutzers umfasst; wobei der Zeiger insbesondere durch Codieren des Nutzercodewertes und des übereinstimmenden Codewertes auf einen weiteren Codewert mittels einer kryptologischen Hashfunktion erzeugt wird; wobei das erfindungsgemäße Verfahren ferner auf dem Mobilgerät den Verfahrensschritt des Zuordnens des Zeigers zu einem oder mehreren Einträgen in der Liste von Kontakten des Nutzers umfasst. Ein besonderer Vorteil in der Verwendung eines Zeigers liegt darin, dass der Nutzer erfährt, welcher seiner Kontakte beispielsweise ein Konto bei einem sozialen Netzwerk oder bei einem IP-Telefonieanbieter unterhält. Er weiß somit durch Abgleich der auf seinem Mobilgerät gespeicherten Kontaktdaten, welcher seiner Kontakte gemeint ist, ohne dass unberechtigte Dritte Rückschlüsse auf die Identität des Kontaktes ziehen können. Ferner ist es besonders bevorzugt, die Mitteilung an das Mobilgerät als Hashwert aus Kontaktcode und Nutzercode auszugestalten. Denn ein solcher Hashwert ergibt nur Sinn für den Nutzer selbst. Nur er kennt sowohl seinen eigenen Nutzercode als auch die codierten (das heißt mittels einer kryptologischen Hashfunktion umgerechneten) Daten seiner Kontakte.

Weiterhin ist es bevorzugt, dass der Servercomputer eine Datenbank, einen Internet-Server, einen Kurznachrichten-Server, einen Host, einen Funknetzbetreiber und/oder einen Web-basierten Dienst umfasst. Durch die Ausgestaltung des Servercomputers als Zentralrechner wird einerseits eine zentrale Verwaltung und ein zentraler Vergleich der Nutzerdaten gewährleistet, und andererseits dem erhöhten Bedürfnis nach Datensicherheit Rechnung getragen.

Gemäß einer weiteren bevorzugten Ausführungsform umfassen die Identifikationsdaten eine Mobiltelefonnummer, eine elektronische Seriennummer ESN, eine Mobiltelefonkennung MIN, eine Sicherheitsbezeichnung SID, einen Namen, eine Adresse, eine Festnetztelefonnummer, eine Telefaxnummer, eine Email-Adresse, eine Webseite, ein Alias, ein Geburtsdatum und/oder ein charakterisierendes Merkmal, wobei das charakterisierende Merkmal insbesondere eine geographische Positionsangabe, eine Uhrzeit und/oder eine Kategorie umfasst. Durch eine Ausgestaltung der Identifikationsdaten in der vorgenannten Art ist eine eindeutige Zuordnung zu einem bestimmten Nutzer ermöglicht, ohne dabei einen Verlust der tatsächlichen Information befürchten zu müssen, da Austausch und Vergleich nur anhand hashcodierter Datenelemente erfolgen.

Weiterhin ist es bevorzugt, dass das Senden zwischen Mobilgerät und Servercomputer mittels TCP / IP, insbesondere IP, lPv6, TCP, UDP und/oder MPLS, mittels VolP, insbesondere H.323, MGCP, SIP, RTP, Megaco, Skinny, und/oder mittels eines drahtlosen Protokolls, insbesondere UMTS, GPRS, CDMA, CDMA2000, GSM und/oder WAP erfolgt. Die genannten Übertragungsprotokolle haben sich in der Vergangenheit als besonders vorteilhafte Kommunikationsprotokolle erwiesen.

Gemäß einer weiter bevorzugten Ausführungsform umfasst das Mobilgerät ein Mobiltelefon, ein Personal Digital Assistant PDA, eine drahtlose Kommunikationsvorrichtung, ein drahtloses Telefon mit Speicher und integriertem Adressbuch und/oder Smartphone. Da viele Nutzer zunehmend die Vereinigung vieler Funktionen (wie etwa Telefonie, Internet, soziale Netzwerke) in einem einzigen Gerät für wünschenswert erachten, ist es von Vorteil, das genannte Verfahren insbesondere auf Mobilgeräten der genannten Art auszuführen.

Die erfindungsgemäße Aufgabe wird weiterhin gelöst durch ein Datenverarbeitungsprogramm zur Ausführung auf einem Computer bzw. einem Mobilgerät, welches bewirkt, dass der Computer bzw. das Mobilgerät ein erfindungsgemäßes Verfahren wie oben beschrieben ausführt, wenn das Programm darauf ausgeführt wird. Mit dem erfindungsgemäßen Datenverarbeitungsprogramm wird somit eine effiziente und sichere Möglichkeit zum Empfangen, Verwalten und Versenden von Einzelelementen eines elektronischen Adressbuches bereitgestellt, welche einerseits die spezifischen Umstände, welche sich in technischer Hinsicht aufgrund der erforderlichen Datensicherheit ergeben, andererseits die spezifischen Umstände, die sich aufgrund der unterschiedlichen technischen Möglichkeiten zu Verschlüsselung, Abgleich und Rückmeldung über einen gefundenen Treffer ergeben, in vorteilhafter Weise berücksichtigt.

Die erfindungsgemäße Aufgabe wird weiterhin gelöst durch einen Computer bzw. durch ein Mobilgerät mit einem erfindungsgemäßen Datenverarbeitungsprogramm. Mit dem erfindungsgemäßen Computer bzw. Mobilgerät wird somit eine effiziente und sichere Möglichkeit zum Empfangen, Verwalten und Versenden von Einzelelementen eines elektronischen Adressbuches bereitgestellt, welche einerseits die spezifischen Umstände, welche sich in technischer Hinsicht aufgrund der erforderlichen Datensicherheit ergeben, andererseits die spezifischen Umstände, die sich aufgrund der unterschiedlichen technischen Möglichkeiten zu Verschlüsselung, Abgleich und Rückmeldung über einen gefundenen Treffer ergeben, in vorteilhafter Weise berücksichtigt.

Die erfindungsgemäße Aufgabe wird ferner gelöst durch ein Verfahren zum Empfangen, Verwalten und Versenden von Identifikationsdaten auf einem Mobilgerät, mit den Verfahrensschritten: (i) Codieren von Identifikationsdaten eines Nutzers eines Mobilgerätes in einen Nutzercodewert; (ii) Senden des Nutzercodewertes von dem Mobilgerät an einen Servercomputer; wobei das Codieren von Identifikationsdaten auf einen Nutzercodewert mittels einer kryptologischen Hashfunktion H erfolgt.

Mit dem erfindungsgemäßen Verfahren wird eine effiziente und sichere Möglichkeit zum Empfangen, Verwalten und Versenden von Einzelelementen eines elektronischen Adressbuches bereitgestellt, welche einerseits die spezifischen Umstände, welche sich in technischer Hinsicht aufgrund der erforderlichen Datensicherheit ergeben, andererseits die spezifischen Umstände, die sich aufgrund der unterschiedlichen technischen Möglichkeiten zu Verschlüsselung, Abgleich und Rückmeldung über einen gefundenen Treffer ergeben, in vorteilhafter Weise berücksichtigt. Grundlegender Kern des erfindungsgemä-βen Verfahrens ist dabei, dass jeder Adress- oder Telefonbucheintrag mittels einer kryptologischen Hashfunktion in nicht entschlüsselbarer Form, nämlich als Hashwert, gespeichert und an einen Zentralrechner versendet wird. Mit dem erfindungsgemäßen Verfahren wird es somit in vorteilhafter Weise möglich, Kontaktlisten eines Nutzers in solcher Weise zu verwalten, dass lediglich bestimmte, den spezifischen Bedürfnissen entsprechende Daten versendet werden, welche durch Anwendung einer kryptologischen Hashfunktion auf einen Eintrag in einer elektronischen Datenbank erzeugt werden. Mit dem erfindungsgemäßen Verfahren wird daher einerseits das zu versendende Datenvolumen in signifikanter Weise reduziert, da nicht mehr der vollständige Adressbucheintrag einschließlich Fotos, Videos und Klangbeispielen versendet werden, sondern nur noch ein Rechenwert fester Datengröße und andererseits die Datensicherheit beim Versenden an den Servercomputer stets gewahrt ist, ohne dass hierzu weitere Sicherheitsmaßnahmen im Rahmen der Kommunikationsverbindung zwischen Mobilgerät und Servercomputer erforderlich wären. Insbesondere ist der Server nicht in der Lage die empfangenen Datenpakete zu entschlüsseln.

Die Aufgabe wird weiterhin gelöst durch ein Verfahren zum Empfangen, Verwalten und Versenden von Identifikationsdaten auf einem Servercomputer, mit den Verfahrensschritten: (a) Empfangen von einem oder mehreren Kontaktcodewerten von einem Mobilgerät; (b) Vergleichen von zumindest einem der Kontaktcodewerte mit einem oder mehreren Codewerten, welche auf dem Servercomputer gespeichert sind, um einen gespeicherten Codewert zu finden, welcher mit einem der Kontaktcodewerte übereinstimmt, wobei der gespeicherte Codewert ein übereinstimmender Codewert ist; (c) bei gefundener Übereinstimmung: Senden einer entsprechenden Mitteilung über eine gefundene Übereinstimmung von dem Servercomputer an das Mobilgerät; wobei die empfangenen Kontaktcodewerte und die gespeicherten Codewerte durch Codieren mittels einer kryptologischen Hashfunktion H erzeugt sind.

Mit dem erfindungsgemäßen Verfahren wird eine effiziente und sichere Möglichkeit zum Empfangen, Verwalten und Versenden von Einzelelementen eines elektronischen Adressbuches bereitgestellt, welche einerseits die spezifischen Umstände, welche sich in technischer Hinsicht aufgrund der erforderlichen Datensicherheit ergeben, andererseits die spezifischen Umstände, die sich aufgrund der unterschiedlichen technischen Möglichkeiten zu Verschlüsselung, Abgleich und Rückmeldung über einen gefundenen Treffer ergeben, in vorteilhafter Weise berücksichtigt. Grundlegender Kern des erfindungsgemä-βen Verfahrens ist dabei, dass ein Zentralrechner mittels einer kryptologischen Hashfunktion codierte Daten empfängt. Auf dem Zentralrechner sind die als Hashwerte codierten Daten anderer Nutzer gespeichert. Der Zentralrechner vergleicht in der Folge Hashwerte miteinander. Mit dem erfindungsgemäßen Verfahren wird es somit in vorteilhafter Weise möglich, Kontaktlisten eines Nutzers in solcher Weise zu verwalten, dass lediglich bestimmte, den spezifischen Bedürfnissen entsprechende Daten versendet und empfangen werden, welche durch Anwendung einer kryptologischen Hashfunktion auf einen Eintrag in einer elektronischen Datenbank erzeugt werden. Mit dem erfindungsgemäßen Verfahren bleibt damit die Datensicherheit beim Versenden an den Servercomputer, Speichern auf dem Servercomputer und Vergleichen der Hashwerte stets gewahrt, ohne dass hierzu weitere Sicherheitsmaßnahmen auf dem Servercomputer oder im Rahmen der Kommunikationsverbindung zwischen Mobilgerät und Servercomputer erforderlich sind. Insbesondere ist der Server nicht in der Lage die empfangenen Datenpakete zu entschlüsseln. Beim Abgleich der Daten mit gespeicherten Nutzerdaten werden Hashwerte miteinander verglichen - die entsprechenden Inhalte der Hashwerte sind dem Servercomputer bzw. jedem Dritten unbekannt.

Bevorzugte Ausführungsformen werden anhand der beiliegenden Figuren beschrieben. Es zeigen:
- Fig. 1: eine schematische Darstellung eines bekannten Systems aus Mobilgerät und Servercomputer,
- Fig. 2: eine schematische Darstellung einer Speicheraufteilung eines bekannten Mobilgerätes,
- Fig. 3: eine beispielhafte Darstellung einer Speicheraufteilung eines erfindungsgemäβen Servercomputers,
- Fig. 4: eine beispielhafte Darstellung einer bevorzugten Ausführungsform des erfindungsgemäßen Verfahrens, und
- Fig. 5: eine beispielhafte Darstellung einer bevorzugten Ausführungsform des erfindungsgemäßen Verfahrens.

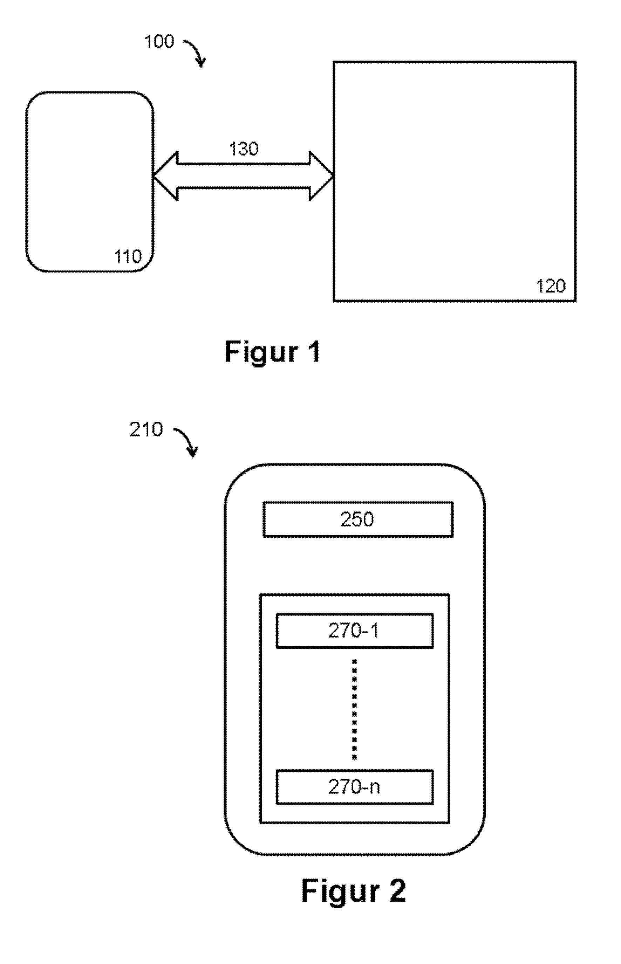

In Fig. 1 ist ein bekanntes System 100 aus einem Mobilgerät 110 und einem Servercomputer 120 dargestellt. Das Mobilgerät 110 kommuniziert mit dem Servercomputer 120 über einen Kanal 130, um mit dem Servercomputer beispielsweise Datenpakete auszutauschen. Servercomputer 120 umfasst beispielsweise eine Datenbank, einen Internet-Server, einen Kurznachrichten-Server, einen Host, einen Funknetzbetreiber und/oder einen Web-basierten Dienst. Mobilgerät 110 umfasst beispielsweise ein Mobiltelefon, ein Personal Digital Assistant PDA, eine drahtlose Kommunikationsvorrichtung, ein drahtloses Telefon mit Speicher und integriertem Adressbuch und/oder ein Smartphone. Bei Kanal 130 kann es sich um eine drahtlose Verbindung oder über eine Verbindung mit einer oder mehreren Leitungen handeln. Insbesondere umfasst Kanal 130 einen Zufallszugriffskanal und/oder einen eigenen Kanal zwischen Mobilgerät 110 und Servercomputer 120.
Figur 2 zeigt eine schematische Darstellung der Speicheraufteilung eines Mobilgerätes 210. Dem Mobilgerät 210 sind Identifikationsdaten 250 zugewiesen, die auf einem entsprechenden Speicherplatz hinterlegt sein können. Bei den Identifikationsdaten 250 handelt es sich beispielsweise um eine Mobiltelefonnummer, eine elektronische Seriennummer ESN, eine Mobiltelefonkennung MIN, eine Sicherheitsbezeichnung SID, einen Namen, eine Adresse, eine Festnetztelefonnummer, eine Telefaxnummer, eine Email-Adresse, eine Webseite, ein Alias, ein Geburtsdatum und/oder um ein charakterisierendes Merkmal, wobei das charakterisierende Merkmal insbesondere eine geographische Positionsangabe, eine Uhrzeit und/oder eine Kategorie umfasst. Mobilgerät 210 weist ferner Speicherplatz für Identifikationsdaten 270-1, ..., 270-n von Kontakten eines Nutzers von Mobilgerät 210 auf. Bei den Identifikationsdaten 270-1, ..., 270-n von Kontakten des Nutzers handelt es sich beispielsweise um Einträge oder Einzelelemente einer Liste oder einer Menge von Kontaktinformationen. Die Identifikationsdaten 270-1, ..., 270-n umfassen beispielsweise Name, Telefonnummer, Mobiltelefonnummer, eine elektronische Seriennummer ESN, eine Mobiltelefonkennung MIN, eine Sicherheitsbezeichnung SID, eine Adresse, eine Festnetztelefonnummer, eine Telefaxnummer, eine Email-Adresse, eine Webseite, ein Alias, ein Geburtsdatum und/oder um ein charakterisierendes Merkmal eines Kontaktes, wobei das charakterisierende Merkmal insbesondere eine geographische Positionsangabe, eine Uhrzeit und/oder eine Kategorie umfasst.

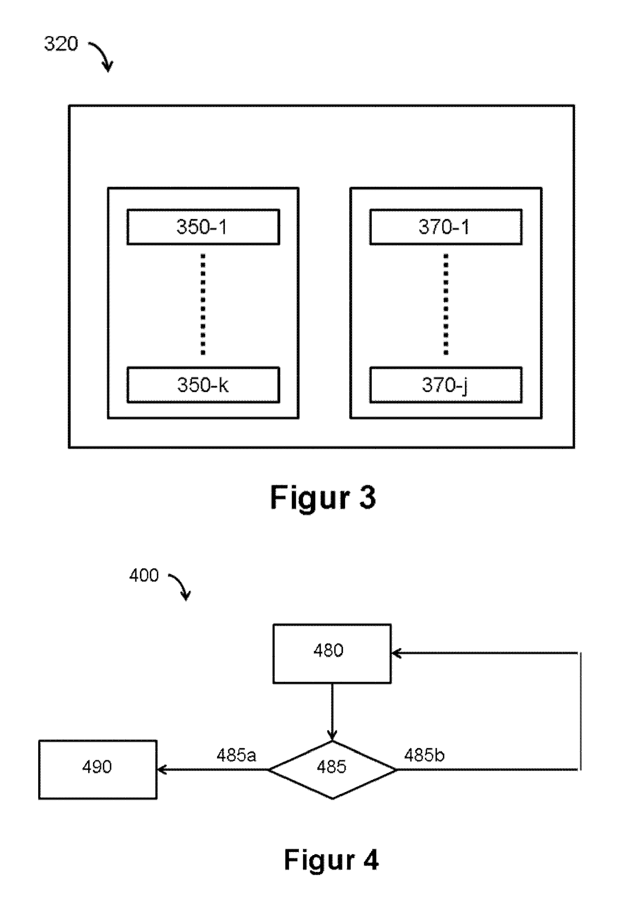

Figur 3 zeigt eine beispielhafte Darstellung einer Speicheraufteilung eines erfindungsgemäßen Servercomputers 320. Servercomputer 320 speichert Nutzercodewerte 350-1, ..., 350-k. Bei Nutzercodewerten 350-1, ..., 350-k handelt es sich um Hashwerte, die aus Identifikationsdaten 250 von Nutzern 1, ..., k von Mobilgeräten 210 mittels Anwendung einer kryptologischen Hashfunktion auf dem Mobilgerät 210 erhalten wurden. Die Rekonstruktion der ursprünglichen Identifikationsdaten 250 aus den Nutzercodewerten 350-1, ..., 350-k ist praktisch unmöglich, weil zur Codierung eine kryptologische Hashfunktion verwendet wurde. Somit ist selbst bei Diebstahl der Nutzercodewerte 350-1, ..., 350-k durch Dritte kein Verlust an Informationssicherheit zu befürchten. Das Hinterlegen eines Nutzercodewertes 350-1, ..., 350-k auf dem Servercomputer 320, wobei Nutzercodewert 350-1, ..., 350-k einer codierten Form der Identifikationsdaten 250 eines Nutzers entspricht erfolgt typischerweise durch Senden des Nutzercodewertes 350-1, ..., 350-k in Form eines Datenpaketes an den Servercomputer 320 über Kanal 130. Um zu ermitteln, ob einer der Kontakte 270-1, ..., 270-n eines Nutzers bereits seinen Nutzercodewert auf Servercomputer 320 hinterlegt hat, wird auf Mobilgerät 210 eine Verschlüsselung von Identifikationsdaten 270-1, ..., 270-n von Kontakten des Nutzers in Kontaktcodewerte 370-1, ..., 370-j mittels einer kryptologischen Hashfunktion durchgeführt. Die derart verschlüsselten (und nicht mehr entschlüsselbaren) Kontaktcodewerte 370-1, ..., 370-j werden in der Folge an Servercomputer 320 gesendet. Auf Servercomputer 320 werden die empfangenen Kontaktcodewerte 370-1, ..., 370-j einzeln mit den hinterlegten Nutzercodewerten 350-1, ..., 350-k verglichen. Erfindungsgemäß werden also Hashwerte statt Identifikationsdaten miteinander verglichen - ein Rückschluss auf die ursprünglichen Daten durch Dritte ist damit ausgeschlossen.

In einer bevorzugten Ausführungsform speichert Servercomputer 320 diejenigen Kontaktcodewerte 370-1, ..., 370-j, die mit keinem der gespeicherten Nutzercodewerte 350-1, ..., 350-k übereinstimmen. Werden weitere Nutzercodewerte auf Servercomputer 320 hinterlegt, vergleicht der Servercomputer automatisch, in regelmäßigen Abständen oder in Antwort auf eine entsprechende Aufforderung durch einen Nutzer die gespeicherten Kontaktcodewerte mit den neu hinterlegten Nutzercodewerten. Auf diese Weise wird ermöglicht, einen Nutzer darüber zu informieren, dass einer seiner Kontakte nun ebenfalls seinen Nutzercodewert hinterlegt hat.

Wird eine Übereinstimmung eines Kontaktcodewertes 370-1, ..., 370-j mit einem Nutzercodewert 350-1, ..., 350-k festgestellt, sendet Servercomputer 320 eine entsprechende Mitteilung an Mobilgerät 210, vorzugsweise über Kanal 130. Diese Mitteilung umfasst dabei die Information, dass eine Information gefunden wurde und vorzugsweise einen Zeiger oder einen Hinweis auf den entsprechenden Eintrag bzw. auf das entsprechende Einzelelement in der Liste der Kontakte 270-1, ..., 270-n eines Nutzers, dessen entsprechender Nutzercodewert auf dem Servercomputer 320 hinterlegt ist. Die Mitteilung kann beispielsweise die Nachricht "Eintrag i entspricht einem hinterlegten Nutzercodewert." umfassen. Auf diese Weise kann der Nutzer des Mobilgerätes 210 in der Liste seiner Kontaktdaten, beispielsweise in seinem elektronischen Adressbuch, nach den Identifikationsdaten 270-i suchen. Die von Servercomputer 320 an Mobilgerät 210 gesendete Information ist für Dritte wertlos, da diese nicht im Besitz des elektronischen Adressbuchs sind und so nicht in der Lage sind, die Identifikationsdaten zu "Eintrag i" zu ermitteln. Servercomputer 320 kann ebenso eine mittels einer kryptologischen Hashfunktion codierte Nachricht senden, beispielsweise bestehend aus den Identifikationsdaten des Nutzers und den Identifikationsdaten von Kontakt i. Dritte können nichts mit dem gesendeten Hashwert anfangen: Selbst wenn Kontakt i auch ein Kontakt eines weiteren Nutzers sein sollte, so könnte dieser weitere Nutzer aus dem vom Servercomputer versendeten Hashwert nicht die Identifikationsdaten rekonstruieren. Hierzu müsste der weitere Nutzer auch in Kenntnis der Identifikationsdaten des Adressaten sein, um diese gemeinsam mit den Identifikationsdaten von Kontakt i zu einem Hashwert zu codieren.

In Figur 4 ist eine beispielhafte Darstellung einer bevorzugten Ausführungsform des erfindungsgemäßen Verfahrens 400 zum Mitteilen einer nachträglich gefundenen Übereinstimmung mit einem neu hinterlegten Nutzercodewert gezeigt. Ein solches Verfahren bietet sich an, falls ein vom Mobilgerät 210 übersendeter Kontaktcodewert mit keinem auf dem Servercomputer 320 gespeicherten Nutzercodewert 350-1, ..., 350-k übereinstimmt und in Antwort darauf auf dem Servercomputer gespeichert wurde. In Schritt 480 wird ein erster Kontaktcodewert geladen und im darauf folgenden Schritt 485 mit dem neu auf dem Servercomputer 320 hinterlegten Nutzercodewert 350-k+1 verglichen. Stimmen beide Codewerte, also beide Hashwerte, miteinander überein, so geht das Verfahren entlang 485a zu Schritt 490 über. In Schritt 490 wird eine Mitteilung über eine gefundene Übereinstimmung an Mobilgerät 210 gesendet. Wird keine Übereinstimmung gefunden, kehrt das Verfahren 400 gemäß 485b zu Schritt 480 zurück und lädt den nächsten Kontaktcodewert, um ihn mit dem neu hinterlegten Nutzercodewert 350-k+1 zu vergleichen.

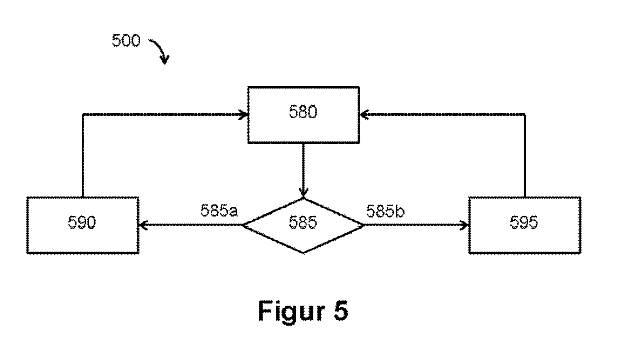

In Figur 5 ist eine beispielhafte Darstellung einer bevorzugten Ausführungsform des erfindungsgemäßen Verfahrens 500 zum Speichern von nicht übereinstimmenden Kontaktcodewerten 370-1, ..., 370-j gezeigt. In Schritt 580 wird ein erster Kontaktcodewert geladen und im darauf folgenden Schritt 585 mit den auf dem Servercomputer 320 hinterlegten Nutzercodewerten 350-1, ..., 350-k verglichen. Stimmen zwei Codewerte, also erster Kontaktcodewert und aktueller Nutzercodewert miteinander überein, so geht das Verfahren entlang 585a zu Schritt 590 über. In Schritt 590 wird eine Mitteilung über eine gefundene Übereinstimmung an Mobilgerät 210 gesendet. Wird keine Übereinstimmung gefunden, so geht das Verfahren entlang 585b zum optionalen Schritt 595 über. In Schritt 595 wird der erste Kontaktcodewert im Servercomputer 320 gespeichert. Im nächsten Schritt kehrt das Verfahren 500 zu Schritt 580 zurück und lädt den nächsten Kontaktcodewert, um ihn mit den hinterlegten Nutzercodewerten 350-1, ..., 350-k zu vergleichen.

## Patentansprüche

1. Verfahren zum Empfangen, Verwalten und Versenden von Identifikationsdaten, mit den Verfahrensschritten:
Hinterlegen eines Nutzercodewertes eines ersten Nutzers eines Mobilgerätes auf einem Servercomputer mittels eines Verfahrens mit den Verfahrensschritten:
(i) auf dem Mobilgerät: Codieren von Identifikationsdaten des Nutzers in einen Nutzercodewert;
(ii) Senden des Nutzercodewertes von dem Mobilgerät an einen Servercomputer;
(iii) Speichern des Nutzercodewertes auf dem Servercomputer; und
Vergleichen von Kontaktcodewerten von Kontakten des Nutzers mit Nutzercodewerten anderer Nutzer mittels eines Verfahrens mit den Verfahrensschritten:
(a) auf dem Mobilgerät: Codieren von einem oder mehreren Einträgen einer Liste von Identifikationsdaten von Kontakten des Nutzers auf jeweils einen Kontaktcodewert, wobei die Liste von Identifikationsdaten auf dem Mobilgerät gespeichert ist;
(b) Senden der einen oder mehreren Kontaktcodewerte von dem Mobilgerät an den Servercomputer;
(c) auf dem Servercomputer: Vergleichen von zumindest einem der Kontaktcodewerte mit einem oder mehreren Codewerten, welche auf dem Servercomputer gespeichert sind, um einen gespeicherten Codewert zu finden, welcher mit einem der Kontaktcodewerte übereinstimmt, wobei der gespeicherte Codewert ein übereinstimmender Codewert ist;
(d) bei gefundener Übereinstimmung: Senden einer entsprechenden Mitteilung über eine gefundene Übereinstimmung von dem Servercomputer an das Mobilgerät;
**dadurch gekennzeichnet, dass**
das Codieren von Identifikationsdaten auf einen Nutzercodewert mittels einer kryptologischen Hashfunktion H erfolgt; und dass
das Codieren von einem oder mehreren Einträgen einer Liste von Identifikationsdaten von Kontakten auf jeweils einen Kontaktcodewert mittels der gleichen kryptologischen Hashfunktion H erfolgt.

2. Verfahren nach Anspruch 1, wobei die Codewerte, welche auf dem Servercomputer gespeichert sind, durch ein Hinterlegen von Nutzercodewerten anderer Nutzer auf dem Servercomputer mittels eines Verfahrens gemäß der Verfahrensschritte (i) bis (iii) erzeugt werden.

3. Verfahren nach einem der vorstehenden Ansprüche, wobei die Schritte (a) bis (d) in Antwort auf ein Hinzufügen eines Eintrags zu der Liste von Identifikationsdaten von Kontakten des Nutzers erfolgen.

4. Verfahren nach einem der vorstehenden Ansprüche, ferner mit den Verfahrensschritten:
(e) Speichern von einem oder mehreren der Kontaktcodewerte, zu denen kein gespeicherten Codewert gefunden wird, welcher mit einem der Kontaktcodewerte übereinstimmt;
(f) in Antwort auf ein Hinterlegen eines Nutzercodewertes eines zweiten Nutzers auf dem Servercomputer gemäß der Verfahrensschritte (i) bis (iii): Vergleichen der in Schritt (e) gespeicherten Kontaktcodewerte mit dem Nutzercodewert des zweiten Nutzers mittels eines Verfahrens gemäß der Verfahrensschritte (a) bis (d); und
(g) bei gefundener Übereinstimmung: Senden einer entsprechenden Mitteilung über eine gefundene Übereinstimmung von dem Servercomputer an das Mobilgerät des ersten Nutzers.

5. Verfahren nach einem der vorstehenden Ansprüche, wobei Schritt (d) ferner den folgenden Schritt umfasst:
bei gefundener Übereinstimmung, Senden einer entsprechenden Mitteilung über eine gefundene Übereinstimmung von dem Servercomputer an ein Mobilgerät eines ersten Kontaktes des Nutzers, wobei der erste Kontakt dem übereinstimmenden Codewert entspricht;
wobei die Mitteilungen an den Nutzer und an den ersten Kontakt insbesondere als Push-Notification gesendet werden.

6. Verfahren nach einem der vorstehenden Ansprüche, wobei die kryptologische Hashfunktion eine Einweg-Hashfunktion, eine kollisionsresistente Hashfunktion oder eine schlüsselabhängige Hashfunktion umfasst.

7. Verfahren nach einem der vorstehenden Ansprüche,
wobei die Mitteilung über eine gefundene Übereinstimmung einen Zeiger auf einen oder mehrere Einträge in der Liste von Identifikationsdaten von Kontakten des Nutzers umfasst; wobei der Zeiger insbesondere durch Codieren des Nutzercodewertes und des übereinstimmenden Codewertes auf einen weiteren Codewert mittels einer kryptologischen Hashfunktion erzeugt wird; ferner mit dem Verfahrensschritt:
auf dem Mobilgerät: Zuordnen des Zeigers zu einem oder mehreren Einträgen in der Liste von Kontakten des Nutzers.

8. Verfahren nach einem der vorstehenden Ansprüche, wobei der Servercomputer eine Datenbank, einen Internet-Server, einen Kurznachrichten-Server, einen Host, einen Funknetzbetreiber und/oder einen Web-basierten Dienst umfasst.

9. Verfahren nach einem der vorstehenden Ansprüche, wobei die Identifikationsdaten eine Mobiltelefonnummer, eine elektronische Seriennummer ESN, eine Mobiltelefonkennung MIN, eine Sicherheitsbezeichnung SID, einen Namen, eine Adresse, eine Festnetztelefonnummer, eine Telefaxnummer, eine Email-Adresse, eine Webseite, ein Alias, ein Geburtsdatum und/oder ein charakterisierendes Merkmal umfassen, wobei das charakterisierende Merkmal insbesondere eine geographische Positionsangabe, eine Uhrzeit und/oder eine Kategorie umfasst.

10. Verfahren nach einem der vorstehenden Ansprüche, wobei das Senden zwischen Mobilgerät und Servercomputer mittels TCP / IP, insbesondere IP, IPv6, TCP, UDP und/oder MPLS, mittels VolP, insbesondere H.323, MGCP, SIP, RTP, Megaco, Skinny, und/oder mittels eines drahtlosen Protokolls, insbesondere UMTS, GPRS, CDMA, CDMA2000, GSM und/oder WAP erfolgt.

11. Verfahren nach einem der vorstehenden Ansprüche, wobei das Mobilgerät ein Mobiltelefon, ein Personal Digital Assistant PDA, eine drahtlose Kommunikationsvorrichtung, ein drahtloses Telefon mit Speicher und integriertem Adressbuch und/oder Smartphone umfasst.

12. Datenverarbeitungsprogramm zur Ausführung auf einem Computer bzw. einem Mobilgerät, welches bewirkt, dass der Computer bzw. das Mobilgerät ein Verfahren nach einem der vorstehenden Ansprüche ausführt, wenn das Programm darauf ausgeführt wird.

13. Computer bzw. Mobilgerät mit einem Datenverarbeitungsprogramm nach Anspruch 12.

14. Verfahren zum Empfangen, Verwalten und Versenden von Identifikationsdaten auf einem Mobilgerät, mit den Verfahrensschritten:
(i) Codieren von Identifikationsdaten eines Nutzers eines Mobilgerätes in einen Nutzercodewert;
(ii) Senden des Nutzercodewertes von dem Mobilgerät an einen Servercomputer;
**dadurch gekennzeichnet, dass**
das Codieren von Identifikationsdaten auf einen Nutzercodewert mittels einer kryptologischen Hashfunktion H erfolgt.

15. Verfahren zum Empfangen, Verwalten und Versenden von Identifikationsdaten auf einem Servercomputer, mit den Verfahrensschritten:
(a) Empfangen von einem oder mehreren Kontaktcodewerten von einem Mobilgerät;
(b) Vergleichen von zumindest einem der Kontaktcodewerte mit einem oder mehreren Codewerten, welche auf dem Servercomputer gespeichert sind, um einen gespeicherten Codewert zu finden, welcher mit einem der Kontaktcodewerte übereinstimmt, wobei der gespeicherte Codewert ein übereinstimmender Codewert ist;
(c) bei gefundener Übereinstimmung: Senden einer entsprechenden Mitteilung über eine gefundene Übereinstimmung von dem Servercomputer an das Mobilgerät;
**dadurch gekennzeichnet, dass**
die empfangenen Kontaktcodewerte und die gespeicherten Codewerte durch Codieren mittels einer kryptologischen Hashfunktion H erzeugt sind.
